# EUROPÄISCHE PATENTSCHRIFT

(11) **EP 1 925 790 B1**
(45) Veröffentlichungstag und Bekanntmachung des Hinweises auf die Patenterteilung: **14.04.2010**
(21) Anmeldenummer: 07120583.5
(22) Anmeldetag: 13.11.2007
(51) Int. Cl.: F01N 3/20, F01N 3/08

(54) **Brennkraftmaschinensystem**
System of an internal combustion engine
Système de moteur à combustion interne

(30) Priorität: 17.11.2006 DE 102006054670
(43) Veröffentlichungstag der Anmeldung: 28.05.2008
(73) Patentinhaber: J. Eberspächer GmbH & Co. KG, 73730 Esslingen (DE)
(72) Erfinder: Kaupert, Andreas, 73730 Esslingen (DE)
(74) Vertreter: BRP Renaud & Partner

(56) Entgegenhaltungen:
- EP-A- 1 211 394
- EP-A- 1 582 712
- WO-A-2005/054657
- WO-A-2006/069670
- DE-A1- 10 232 737
- DE-A1- 10 237 777

## Beschreibung

Die vorliegende Erfindung betrifft ein Brennkraftmaschinensystem, insbesondere in einem Kraftfahrzeug, wie z.B. in dem Dokument EP 1 211 394 beschrieben.

Ein derartiges Brennkraftmaschinensystem umfasst üblicherweise eine Brennkraftmaschine, in der Regel ein Kolbenmotor oder ein Wankelmotor, die mit einem Kraftstoff, wie z.B. Diesel, Benzin, Erdgas oder ein beliebiger anderer Kohlenwasserstoff, betreibbar ist und die zum Generieren von Antriebsleistung dient. Das System umfasst ferner eine mit der Brennkraftmaschine verbundene Abgasleitung zum Abführen von in deren Betrieb entstehenden Motorabgasen.

Zur Abgasreinigung kann in der Abgasleitung u.a. ein NOX-Speicher angeordnet sein, der in dem Motorabgas enthaltenes NOX entzieht und einlagert bzw. speichert. Der NOX-Speicher arbeitet dabei chemisch, d.h., er speichert oder bindet das NOX chemisch. Üblicherweise handelt es sich beim NOX-Speicher um einen NOX-Speicherkatalystor. Die Speicherfähigkeit eines derartigen NOX-Speichers ist begrenzt, so dass der NOX-Speicher regelmäßig bzw. in Abhängigkeit seines Beladungszustands regeneriert werden muss. Zur Regeneration des NOX-Speichers ist es grundsätzlich möglich, mit Hilfe einer entsprechenden Motorsteuerung die Brennkraftmaschine, die im Normalbetrieb überstöchiometrisch betrieben wird, vorübergehend unterstöchiometrisch, also mit einer Luftzahl von kleiner als 1 zu betreiben. In diesem unterstöchiometrischen Betrieb enthält das Motorabgas einen relativ hohen Anteil unverbrannten Kraftstoffs, also unverbrannter Kohlenwasserstoffe. Die Kohlenwasserstoffe reagieren im NOX-Speicher mit dem dort gebundenen NOX. Dabei werden die Kohlenwasserstoffe und NOX zu Kohlendioxid, Wasser und Stickstoff umgesetzt, wodurch sich die Beladung des NOX-Speichers mit NOX reduziert.

Der für die Regeneration des NOX-Speichers erforderliche, relativ stark unterstöchiometrische Betrieb der Brennkraftmaschine kann sich nachteilig auf die Laufruhe der Brennkraftmaschine auswirken. Außerdem muss der NOX-Speicher eine bestimmte Mindesttemperatur aufweisen, um die Regeneration mit den relativ langkettigen und somit vergleichsweise reaktionsträgen Kohlenwasserstoffen realisieren zu können.

Alternativ oder zusätzlich kann eine Abgasanlage mit einem Partikelfilter, insbesondere Rußfilter, ausgestattet sein, das im Betrieb der Brennkraftmaschine Partikel, vorwiegend Rußpartikel, aus dem Motorabgas ausfiltert. Mit zunehmender Partikelbeladung steigt der Durchströmungswiderstand des Partikelfilters, so dass auch ein derartiges Partikelfilter regeneriert werden muss. Für die Regeneration des Partikelfilters wird dessen Temperatur auf eine Entzündungstemperatur erhöht, bei der sich die Partikelbeladung entzündet und abbrennt. Zur Temperatursteigerung ist es z.B. möglich, einem stromauf angeordneten Oxidationskatalysator unverbrannten Kraftstoff, z.B. durch einen vorübergehend unterstöchiometrischen Motorbetrieb oder durch eine entsprechende separate Kraftstoffeinspritzanlage, zuzuführen. Die dann im Oxidationskatalysator ablaufende Reaktion erzeugt Wärme, die über die Motorabgase in das Partikelfilter gelangt.

Alternativ oder zusätzlich kann die Abgasanlage einen Oxidationskatalysator aufweisen, der dazu dient, in den Motorabgase enthaltene unverbrannte Kohlenwasserstoffe und Kohlenmonoxid umzusetzen, um so die Schadstoffemission der Brennkraftmaschine zu reduzieren. Um die gewünschte Oxidationswirkung entfalten zu können, muss der Oxidationskatalysator seine Betriebstemperatur aufweisen. Bei einem Kaltstart der Brennkraftmaschine kann es relativ lange dauern, bis der Oxidationskatalysator seine Betriebstemperatur erreicht. Bis dahin können unverbrannte Kohlenwasserstoffe den Oxidationskatalysator nahezu ungehindert durch strömen, was die Emissionswerte der Brennkraftmaschine während dieser Startphase erheblich verschlechtert. Abhilfe können hier elektrische Heizeinrichtungen schaffen, mit denen der Oxidationskatalysator schneller auf seine Betriebstemperatur gebracht werden kann.

Die vorliegende Erfindung beschäftigt sich mit dem Problem, für ein Brennkraftmaschinensystem der eingangs genannten Art eine verbesserte oder zumindest eine andere Ausführungsform anzugeben. Insbesondere soll eine Regeneration eines NOX-Speichers ermöglicht werden, ohne dass dabei die Brennkraftmaschine stark unterstöchiometrisch betrieben werden muss und/oder ohne dass hierzu der NOX-Speicher eine relativ hohe Temperatur aufweisen muss. Insbesondere soll preiswert eine Regeneration eines Partikelfilters ermöglicht werden, ohne dass hierzu die Brennkraftmaschine stark unterstöchiometrisch betrieben werden muss. Insbesondere soll während eines Kaltstarts der Brennkraftmaschine ein Oxidationskatalysator rasch auf seine Betriebstemperatur gebracht werden können.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, Wasserstoffgas an geeigneter Stelle in die Abgasleitung einzuleiten, um so die Regeneration eines NOX-Speichers und/oder eines Partikelfilters und/oder die Aufheizung eines Oxidationskatalysators zu erzielen.

Die Regeneration des NOX-Speichers kann mit Hilfe von Wasserstoffgas realisiert werden, das für den Regenerationsbetrieb stromauf des NOX-Speichers in die Abgasleitung eingeleitet wird. Der Wasserstoff dieses Wasserstoffgases besitzt eine deutlich höhere Reaktivität als Kohlenwasserstoffe, wodurch die Regeneration des NOX-Speichers bereits bei relativ niedrigen Temperaturen gestartet werden kann. Außerdem kann das Wasserstoffgas in Abhängigkeit seiner Herstellung bereits eine relativ hohe Temperatur aufweisen, was die Erwärmung des NOX-Speichers beschleunigt. Der Wasserstoff setzt das gespeicherte NOX in Wasser und Stickstoff um, ohne dass dabei Kohlendioxid entsteht. Insoweit wird durch die Erfindung eine Verbesserung der Emissionswerte erreicht. Da außerdem für die Regeneration des NOX-Speichers keine Kohlenwasserstoffe mehr benötigt werden, kann die Brennkraftmaschine stöchiometrisch betrieben werden, ebenso ist ein leicht unterstöchiometrischer Betrieb möglich. Ein überstöchiometrischer Betrieb, also ein Betrieb mit Luftüberschuss, ist zu vermeiden, da sonst der eingeleitete Wasserstoff nicht mit dem NOX, sondern mit dem Sauerstoff der Luft reagiert.

Die Regeneration des Partikelfilters kann mit Hilfe von Wasserstoffgas realisiert werden, das für den Regenerationsbetrieb stromauf des Partikelfilters in die Abgasleitung eingeleitet wird. Je nach Temperatur kann das Wasserstoffgas bei überstöchiometrischem Motorbetrieb verbrennen und dadurch die zum Starten der Partikelfilterregeneration erforderliche Wärme erzeugen. Außerdem kann das Wasserstoffgas in Abhängigkeit seiner Herstellung bereits eine relativ hohe Temperatur aufweisen, was die Aufheizung des Partikelfilters beschleunigt.

Die Aufheizung des Oxidationskatalysators kann mit Hilfe von Wasserstoffgas realisiert werden, das für den Aufheizbetrieb stromauf des Oxidationskatalysators in die Abgasleitung eingeleitet wird. Die gegenüber Kohlenwasserstoffen deutlich erhöhte Reaktivität des Wasserstoffs ermöglicht eine exotherme Verbrennungsreaktion im Oxidationskatalysator bereits bei stark reduzierten Temperaturen. Gleichzeitig wird dadurch der Oxidationskatalysator rasch erwärmt. Außerdem kann das Wasserstoffgas in Abhängigkeit seiner Herstellung bereits eine relativ hohe Temperatur aufweisen, was die Erwärmung des Oxidationskatalysators beschleunigt. Die Zuführung des Wasserstoffgases stromauf des Oxidationskatalysators kann auch zum Einleiten der Partikelfilterregeneration, also zum Aufheizen des Partikelfilters genutzt werden.

Bei der Erfindung wird der Wasserstoff in Form eines Wasserstoffgas enthaltenden Reformatgases bereit gestellt, das mit Hilfe eines Reformers aus einem Wasserstoff enthaltenden Brennstoff und einem Sauerstoff enthaltenden Oxidator generiert wird. Als Oxidator dient Beispielsweise Luft. Zum Einleiten dieses Reformatgases in die Abgasleitung stromauf des NOX-Speichers bzw. stromauf des Partikelfilters bzw. stromauf des Oxidationskatalysators ist eine Reformateinleiteinrichtung vorgesehen, die auf geeignete Weise mit dem Reformer und der Abgasleitung gekoppelt ist.

Bei einer vorteilhaften Ausführungsform ist der Brennstoff, aus dem der Reformer das Wasserstoffgas enthaltende Reformatgas gewinnt, durch den Kraftstoff gebildet, mit dem die Brennkraftmaschine betrieben wird. Bei dieser Ausführungsform ist der Reformer an einen Kraftstofftank angeschlossen, an den auch die Brennkraftmaschine angeschlossen ist.

Bei einer weiteren vorteilhaften Ausführungsform kann der Reformer Bestandteil eines Brennstoffzellensystems sein, das neben dem Reformer zumindest eine Brennstoffzelle zum Generieren von elektrischem Strom aus einem durch das Reformatgas gebildeten Anodengas und einem Sauerstoffgas enthaltenden Oxidatorgas aufweist. Ein derartiges Brennstoffzellensystem kann in einem Fahrzeug als zusätzliche oder als einzige Stromquelle vorgesehen sein, um elektrische Verbraucher des Fahrzeugs mit Strom zu versorgen. Bei einer derartigen Ausführungsform verwendet die Erfindung einen im Fahrzeug ohnehin vorhandenen Reformer und koppelt das Brennstoffzellensystem mit der Abgasleitung über die Reformateinleiteinrichtung. Bei einem derartigen Fahrzeug gestaltet sich die Realisierung der vorliegenden Erfindung besonders preiswert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche, ähnliche oder funktional gleiche Komponenten beziehen. Es zeigen, jeweils schematisch,

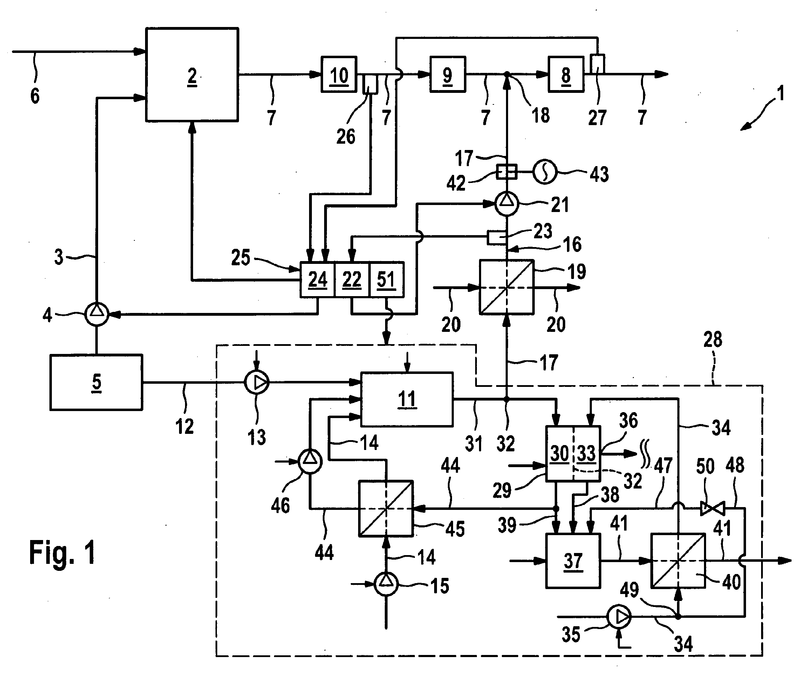

- Fig. 1 bis 3: jeweils eine stark vereinfachte, schaltplanartige Prinzipdarstellung eines Brennkraftmaschinensystems unterschiedlicher Ausführungsformen.

Entsprechend den Fig. 1 bis 3 umfasst ein Brennkraftmaschinensystem 1, das vorzugsweise in einem Kraftfahrzeug angeordnet ist, eine Brennkraftmaschine 2, z.B. ein Kolbenmotor, die in üblicher Weise mit einem Kraftstoff betrieben wird und die zum Generieren mechanischer Antriebsleistung dient. Verwendet wird dabei als Kraftstoff ein Kohlenwasserstoff, wie z.B. Benzin, Diesel oder Erdgas. Den Kraftstoff erhält die Brennkraftmaschine 2 über eine Kraftstoffleitung 3, in der eine Kraftstofffördereinrichtung 4, z.B. eine Pumpe, angeordnet ist. Die Kraftstoffleitung 3 ist an einen Kraftstofftank 5 angeschlossen, in dem der Kraftstoff bevorratet ist. An die Brennkraftmaschine 2 ist außerdem eine Frischgasleitung 6 angeschlossen, über die die Brennkraftmaschine 2 mit einem Sauerstoff enthaltendem Frischgas, vorzugsweise Luft, versorgt wird.

Ferner umfasst das Brennkraftmaschinensystem 1 eine Abgasleitung 7, die an die Brennkraftmaschine 2 angeschlossen ist und die Motorabgas von der Brennkraftmaschine 2 abführt, das im Betrieb der Brennkraftmaschine 2 bei der Verbrennung des Kraftstoffs entsteht. Die Abgasleitung 7 enthält in den gezeigten Beispielen einen NOX-Speicher 8, der vorzugsweise durch einen NOX-Speicherkatalysator gebildet ist. Der NOX-Speicher 8 ist so ausgestaltet, dass er bei seiner Durchströmung mit Motorabgas darin enthaltenes NOX einlagert bzw. speichert. Zusätzlich oder alternativ kann in der Abgasleitung 7, vorzugsweise stromauf des NOX-Speichers 8, ein Partikelfilter 9 angeordnet sein, das vorzugsweise bei einer als Dieselmotor ausgebildeten Brennkraftmaschine 2 zur Anwendung kommt und das zum Abreinigen von Partikeln, vorzugsweise Rußpartikel, dient, die das Motorabgas mitführt. Zusätzlich oder alternativ kann in der Abgasleitung 7, zweckmäßig stromauf des NOX-Speichers 8 bzw. stromauf des Partikelfilters 9, ein Oxidationskatalysator 10 angeordnet sein, der insbesondere dazu dient, beim überstöchiometrischen Betrieb der Brennkraftmaschine 2, also bei einem Betrieb mit Luft- bzw. Sauerstoffüberschuss, durch unvollständige Verbrennungsvorgänge in der Brennkraftmaschine 2 nicht oder nicht vollständig umgesetzte Kohlenwasserstoffe und Kohlenmonoxid umzusetzen.

Das erfindungsgemäße Brennkraftmaschinensystem 1 ist außerdem mit einem Reformer 11 ausgestattet, der dazu dient, aus einem Wasserstoff enthaltenden Brennstoff und einem Sauerstoff enthaltenden Oxidator ein Wasserstoffgas enthaltendes Reformatgas zu generieren. Derartige Reformer 11 sind beispielsweise aus Brennstoffzellensystemen bekannt und arbeiten beispielsweise mit partieller Oxidation eines Kohlenwasserstoffs, die z.B. bei einem stark unterstöchiometrischen Betrieb mit Hilfe eines entsprechenden Katalysators realisierbar ist. Als Brennstoff eignen sich für den Reformer 11 daher Kohlenwasserstoffe, wie z.B. Benzin, Diesel, Biodiesel und Erdgas, die Wasserstoff molekular bzw. atomar, also chemisch gebunden, enthalten. Zweckmäßig ist dabei eine Ausführungsform, bei welcher der Reformer 11 als Brennstoff den Kraftstoff verwendet, mit dem auch die Brennkraftmaschine 2 betrieben wird. Dementsprechend ist hier eine Brennstoffleitung 12 vorgesehen, die ebenfalls an den Kraftstofftank 5 angeschlossen ist. Die Brennstoffleitung 12 versorgt den Reformer 11 mit dem als Brennstoff dienenden Kraftstoff und enthält hierzu vorzugsweise eine Brennstofffördereinrichtung 13, z.B. eine Pumpe. Zur Versorgung des Reformers 11 mit einem geeigneten Oxidator ist eine Oxidatorleitung 14 vorgesehen, in der eine entsprechende Oxidatorfördereinrichtung 15, z.B. ein Gebläse, angeordnet sein kann. Diese Oxidatorfördereinrichtung 15 realisiert aus kostengründen ein kleineres Druckniveau als die Brennkraftmaschine 2. Als Oxidator dient vorzugsweise Luft.

Das Brennkraftmaschinensystem 1 ist außerdem mit einer Reformateinleiteinrichtung 16 ausgestattet, mit deren Hilfe zumindest ein Teil des vom Reformer 11 erzeugten Reformatgases in die Abgasleitung 7 einleitbar ist. Hierzu ist die Reformateinleiteinrichtung 16 auf geeignete Weise mit dem Reformer 11 und mit der Abgasleitung 7 gekoppelt.

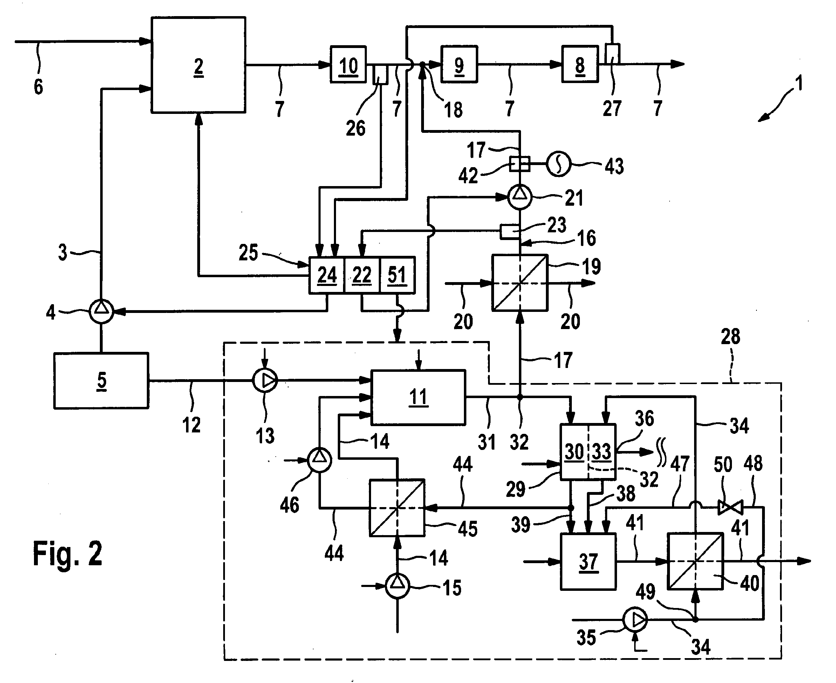

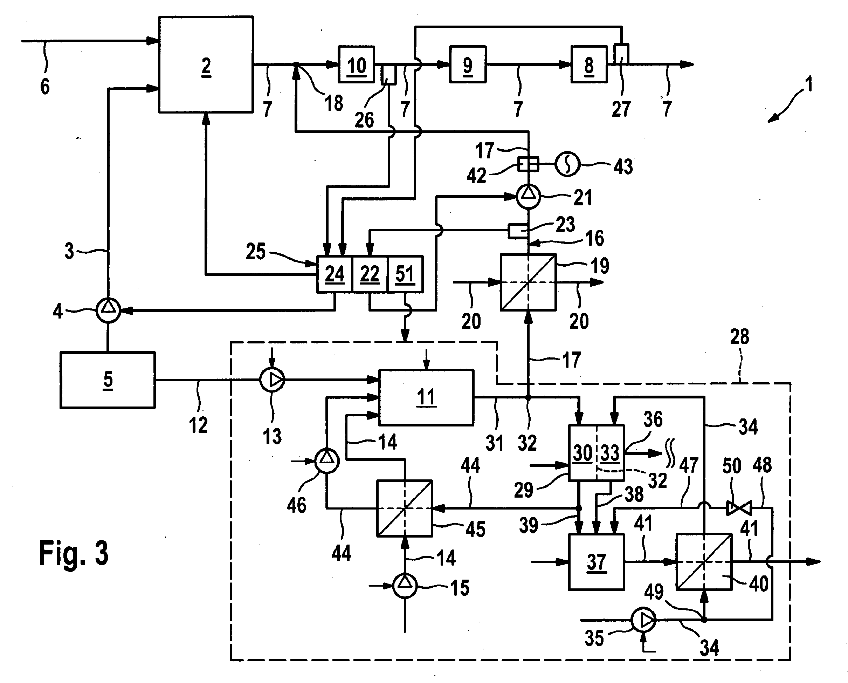

Die Reformateinleiteinrichtung 16 umfasst hierbei eine Reformatleitung 17, die eingangsseitig mit dem Reformer 11 kommuniziert und die ausgangsseitig über eine Einleitstelle 18 an die Abgasleitung 7 angeschlossen ist. Die Einleitstelle 18 ist bei der in Fig. 1 gezeigten Ausführungsform stromauf des NOX-Speichers 8 und stromab des Partikelfilters 9 angeordnet. Bei der in Fig. 2 gezeigten Ausführungsform ist die Einleitstelle 18 stromauf des Partikelfilters 9 und stromab des Oxidationskatalysators 10 angeordnet. Bei der in Fig. 3 gezeigten Ausführungsform ist die Einleitstelle 18 stromauf des Oxidationskatalysators 10 angeordnet. Im Übrigen unterscheiden sich die drei gezeigten Ausführungsformen nicht. Denkbar ist z.B. eine Ausführungsform, bei der die Reformateinleiteinrichtung 16 so ausgestaltet ist, dass sie bedarfsabhängig Reformatgas stromauf des NOX-Speichers 8 und/oder stromauf des Partikelfilters 9 und/oder stromauf des Oxidationskatalysators 10 in die Abgasleitung 7 einleiten kann. Hierzu ist die Reformatleitung 17 über entsprechende Zweige zumindest an zwei der drei gezeigten Einleitstellen 18 an die Abgasleitung 7 angeschlossen. Die gezielte Einbringung des Reformatgases an den verschiedenen Einleitstellen kann z.B. mit Hilfe einer entsprechenden Ventileinrichtung realisiert werden.

In der Reformatleitung 17 ist erfindungsgemäß ein Reformatwärmeübertrager 19 angeordnet. Auf diese Weise kann mit Hilfe eines entsprechenden Kühlmediums dem Reformatgas Wärme entzogen werden, bevor es in die Abgasleitung 7 eingeleitet wird. Bei einer bevorzugten Ausführungsform kann der Reformatwärmeübertrager 19 in einen Kühlkreis 20 der Brennkraftmaschine 2 eingebunden sein, so dass er die Reformatleitung 17 mit dem Kühlkreis 20 wärmeübertragend koppelt. Dementsprechend kann die dem Reformatgas entzogene Wärme über einen ohnehin vorhandenen Kühlkreis abgeführt werden. Gleichzeitig kann ein gegebenenfalls vorhandener Wärmebedarf der Brennkraftmaschine 2 hierdurch zumindest teilweise gedeckt werden. Der Reformatwärmeübertrager 19 ist vorzugsweise so ausgelegt, dass das darin gekühlte Reformatgas jedenfalls nicht unter die Taupunkttemperatur bzw. Kondensationstemperatur abgekühlt wird, um eine Kondensation von im Reformatgas enthaltenen Wasserdampf und Restkohlenwasserstoffen zu vermeiden.

Die Reformateinleiteinrichtung 16 weist ferner eine Reformatfördereinrichtung 21 auf, z.B. ein Gebläse, eine Pumpe oder einen Kompressor, die in der Reformatleitung 17, und zwar vorzugsweise stromab des Reformatwärmeübertragers 19 angeordnet ist. Durch die Anordnung stromab des Reformatwärmeübertragers 19 kann die Reformatfördereinrichtung 21 vergleichsweise preiswert realisiert werden, da sie nur eine reduzierte Temperaturbeständigkeit aufweisen muss. Sofern die Oxidatorfördereinrichtung 15 stärker ausgelegt wird und ein hinreichendes Druckniveau realisieren kann, ist es grundsätzlich möglich, auf die Reformatfördereinrichtung 21 und/oder auf den Reformatwärmeübertrager 19 zu verzichten.

Die Reformateinleiteinrichtung 16 kann außerdem mit einer Ventileinrichtung 42 ausgestattet sein, die vorzugsweise stromab der Reformatfördereinrichtung 21 in der Reformatleitung 17 angeordnet ist. Die Ventileinrichtung 42 dient dazu, eine unerwünschte Rückströmung von Motorabgas durch die Reformatleitung 17 zum Reformer 11 zu verhindern und kann hierzu z.B. als Rückschlagsperrventil ausgestaltet sein. Optional kann des Weiteren ein Reformatspeicher 43 vorhanden sein, der vorzugsweise stromab der Reformatfördereinrichtung 21 an die Reformatleitung 17 angeschlossen ist. Im gezeigten Beispiel erfolgt die Kopplung zwischen dem Reformatspeicher 43 und der Reformatleitung 17 über die Ventileinrichtung 42, die dann zur Realisierung entsprechender Schaltzustände zum Aufladen des Reformatspeichers 43 mit Reformatgas aus dem Reformer 11 und zum Entladen des Reformatspeichers 43 durch Einleiten des Reformatgases in die Abgasleitung 7 ausgestaltet ist. Hierdurch ist es beispielsweise möglich, das Reformatgas unter einem vorbestimmten Druck im Reformatspeicher 43 zu speichern und bei Bedarf und einer Luftzahl kleiner 1 impuls- oder schlagartig in die Abgasleitung 7 zu entladen.

Zweckmäßig ist das Brennkraftmaschinensystem 1 mit einer Steuerung 22 ausgestattet, mit deren Hilfe die Reformateinleiteinrichtung 16 betätigbar ist. Hierzu ist die Steuerung 22 zweckmäßig mit der Reformatfördereinrichtung 21 gekoppelt. Ferner kann die Steuerung 22 mit einem Temperatursensor 23 gekoppelt sein, der in oder an der Reformatleitung 17 stromab des Reformatwärmeübertragers 19 angeordnet ist und die Reformatgastemperatur ermittelt. Die Steuerung 22 ist außerdem mit der Brennkraftmaschine 2 bzw. mit einer mit der Brennkraftmaschine 2 gekoppelten Motorsteuerung 24 gekoppelt. Vorzugsweise sind die Steuerung 22 und die Motorsteuerung 24 in einem gemeinsamen Steuergerät 25 angeordnet. Die Motorsteuerung 24 betätigt beispielsweise die Kraftstofffördereinrichtung 4, die zweckmäßig durch eine Einspritzeinrichtung gebildet ist. Ferner ist die Motorsteuerung 24 z.B. mit einer Lambda-Sonde 26 gekoppelt, welche die Luftzahl im Motorabgas bestimmt. Die Anordnung der Lambda-Sonde 26 an oder in der Abgasleitung 7 zwischen dem Oxidationskatalysator 10 und dem Partikelfilter 9 ist hier rein exemplarisch; insbesondere kann die Lambda-Sonde 26 auch zwischen NOX-Speicher 8 und Partikelfilter 9 oder stromab des NOX-Speichers 8 oder stromauf des Oxidationskatalysators 10 an oder in der Abgasleitung 7 angeordnet sein. Optional kann die Motorsteuerung 24 noch mit einer NOX-Sonde 27 gekoppelt sein, die stromab des NOX-Speichers 8 an oder in der Abgasleitung 7 angeordnet ist und mit der NOX im Motorabgas detektierbar ist. Beispielsweise kann mit Hilfe einer derartigen NOX-Sonde 27 der Beladungszustand des NOX-Speichers 8 ermittelt werden. Sobald die NOX-Sonde 27 NOX im Motorabgas feststellt, ist eine Regeneration des NOX-Speichers 8 erforderlich.

Vorzugsweise ist das Fahrzeug, das mit dem Brennkraftmaschinensystem 1 ausgestattet ist, außerdem mit einem Brennstoffzellensystem 28 ausgestattet, das in Fig. 1 durch einen mit unterbrochener Linie gezeichneten Rahmen eingefasst ist. Der Reformer 11 bildet dabei einen wesentlichen Bestandteil dieses Brennstoffzellensystems 28. Das erfindungsgemäße Brennkraftmaschinensystem 1 verwendet somit einen am Fahrzeug ohnehin vorhandenen Bestandteil, nämlich den Reformer 11 bzw. dessen Reformatgas zur Regeneration des NOX-Speichers 8 bzw. zur Regeneration des Partikelfilters 9 bzw. zum Aufheizen des Partikelfilters 9 bzw. zum Aufheizen des Oxidationskatalysators 10. Die Reformateinleiteinrichtung 16 realisiert dabei die Kopplung zwischen dem Brennstoffzellensystem 28 und der Abgasleitung 7.

Das Brennstoffzellensystem 28 umfasst neben dem Reformer 11 zumindest eine Brennstoffzelle 29. Diese dient in bekannter Weise zum Generieren von elektrischem Strom aus einem Wasserstoffgas enthaltenden Anodengas und einem Sauerstoffgas enthaltenden Kathodengas. Als Anodengas dient dabei das vom Reformer 11 generierte Reformatgas, das einer Anodenseite 30 der Brennstoffzelle 29 über eine eingangsseitig mit dem Reformer 11 kommunizierende Anodengasleitung 31 zugeführt wird. Bei einer Abzweigstelle 32 erfolgt die Kopplung zwischen der Reformateinleiteinrichtung 16 und dem Brennstoffzellensystem 28. Bei der Abzweigstelle 32 zweigt die Reformatleitung 17 von der mit dem Reformer 11 verbundenen Anodengasleitung 31 ab. Alternativ zweigt bei der Abzweigung 32 die Anodengasleitung 31 von der mit dem Reformer 11 verbundenen Reformatleitung 17 ab.

In der Brennstoffzelle 29 ist die Anodenseite 30 durch ein Elektrolyt 32, das insbesondere eine Membran ist, von einer Kathodenseite 33 getrennt. Der Kathodenseite 33 wird das Kathodengas über eine Kathodengasleitung 34 zugeführt, in der eine Kathodengasfördereinrichtung 35, z.B. ein Gebläse, angeordnet sein kann. Als Kathodengas wird vorzugsweise Luft verwendet.

Die Brennstoffzelle 29 weist zumindest einen elektrischen Anschluss 36 auf, an dem im Betrieb der Brennstoffzelle 29 elektrischer Strom abgreifbar ist. Die Brennstoffzelle 29 kann als Hochtemperatur-Brennstoffzelle, insbesondere als Festkörper-Brennstoffzelle, sog. SOFC-Brennstoffzelle ausgestaltet sein. Ebenso ist es möglich, die Brennstoffzelle 29 als Niedertemperatur-Brennstoffzelle auszugestalten, insbesondere als PEM-Brennstoffzelle, die mit einer Protonen-Transport-Membran bzw. mit einer Polymer-Elektrolyt-Membran arbeitet. Sofern es sich um eine PEM-Brennstoffzelle handelt, ist der Reformer 11 zweckmäßig mit einer CO-Gasreinigungseinrichtung ausgestattet, um den Kohlenmonxidgehalt im Refomatgas zu reduzieren.

Vorzugsweise kann das Brennstoffzellensystem 28 mit einem Restgasbrenner 37 ausgestattet sein, in dem eine Verbrennung von Wasserstoffgas enthaltendem Anodenabgas mit Sauerstoffgas enthaltenden Kathodenabgas stattfindet. Vorzugsweise kann der Restgasbrenner 37 in die Brennstoffzelle 29 ausgangsseitig integriert sein, so dass die Brennstoffzelle 29 und der Restgasbrenner 37 eine bauliche Einheit bilden. Im gezeigten Beispiel wird dem Restgasbrenner 37 das Kathodenabgas über eine Kathodenabgasleitung 38 zugeführt, während er das Anodenabgas über eine Anodenabgasleitung 39 erhält.

Das Brennstoffzellensystem 28 ist vorzugsweise mit wenigstens einem Wärmeübertrager 40 ausgestattet, der einerseits in eine Brennerabgasleitung 41 und andererseits z.B. in die Kathodengasleitung 34 eingebunden ist. Der Wärmeübertrager 40 dient zur wärmeübertragenden Kopplung des vom Restgasbrenner 37 erzeugten Brennerabgases mit dem der Brennstoffzelle 29 zuzuführenden Kathodengas. Bei einer bevorzugten Ausführungsform kann der Wärmeübertrager 40 in den Restgasbrenner 37 ausgangsseitig baulich integriert sein. Der Restgasbrenner 37 bildet dann zusammen mit dem Wärmeübertrager 40 eine bauliche Einheit.

Das Brennstoffzellensystem 28 kann außerdem mit einer Rezirkulationsleitung 44 ausgestattet sein, die einerseits an die Anodenabgasleitung 39 und andererseits an die Eingangsseite des Reformers 11 angeschlossen ist. Über die Rezirkulationsleitung 44 kann Wasserstoff enthaltendes Anodenabgas dem Reformerprozess zugeführt werden, was diesen verbessert. In der Rezirkulationsleitung 44 ist vorzugsweise ein Rezirkulationswärmeübertrager 45 angeordnet, der außerdem z.B. in der Oxidatorleitung 14 angeordnet ist. Dieser Rezirkulationswärmeübertrager 45 bewirkt im Betrieb einerseits eine Erwärmung des Oxidators, was den Reformerprozess verbessert, und andererseits eine Kühlung des rezirkulierten Anodenabgases, was es ermöglicht, stromab des Rezirkulationswärmeübertragers 45 eine vergleichsweise preiswerte Rezirkulationsfördereinrichtung 46, z.B. eine Pumpe, einen Kompressor oder ein Gebläse, in der Rezirkulationsleitung 45 zum Antreiben des Anodenabgases anzuordnen.

Insbesondere für einen Startvorgang des Brennstoffzellensystems 28 kann außerdem der Restgasbrenner 37 mit einer Kühlgasversorgung 47 ausgestattet sein, die z.B. über eine Kühlgasleitung 48 dem Restgasbrenner 37, bevorzugt kathodenseitig, ein geeignetes Kühlgas, vorzugsweise Luft, zuführt. Beispielsweise zweigt die Kühlgasleitung 48 bei 49 stromauf des Wärmeübertragers 40 von der Kathodengasleitung 34 ab. Zum Regulieren der Kühlgasmenge kann ein entsprechendes Stellglied 50 vorgesehen sein.

Ferner ist auch das Brennstoffzellensystem 28 zweckmäßig mit einer Steuerung 51 ausgestattet. Diese Brennstoffzellensystemsteuerung 51 kommuniziert auf geeignete Weise mit der Steuerung 22 und/oder mit der Motorsteuerung 24 und kann - wie hier - im Steuergerät 25 angeordnet sein. Die Brennstoffzellensystemsteuerung 51 dient zur Betätigung des Brennstoffzellensystems 28 bzw. der einzelnen Komponenten des Brennstoffzellensystems 28. Beispielsweise ist hierzu die Brennstoffzellensystemsteuerung 51 mit den Fördereinrichtungen 13, 15, 35, 46, mit dem Stellglied 50, mit dem Reformer 11, mit der Brennstoffzelle 29 und mit dem Restgasbrenner 37 verbunden.

Das erfindungsgemäße Brennkraftmaschinensystem 1 arbeitet wie folgt:

Im normalen Betrieb der Brennkraftmaschine 2 wird diese stöchiometrisch oder überstöchiometrisch, also mit Luftüberschuss betrieben. In diesem Normalbetrieb erzeugt die Brennkraftmaschine 2 Motorabgas, das NOX enthält. Das NOX wird im NOX-Speicher 8 eingelagert. Weiter fallen im Betrieb der Brennkraftmaschine 2 Partikel an, die das Partikelfilter 9 dem Motorabgas entzieht und einlagert. Sobald der NOX-Speicher 8 einen vorbestimmten Sättigungsgrad erreicht, ist eine Regeneration des NOX-Speichers 8 erforderlich. Entsprechend ist eine Regeneration des Partikelfilters 9 erforderlich, sobald das Partikelfilter 9 einen vorbestimmten Beladungsgrad erreicht. Alternativ kann die Regeneration des NOX-Speichers 8 bzw. des Partikelfilters 9 in Abhängigkeit vorbestimmter Betriebszeitdauern der Brennkraftmaschine 2 durchgeführt werden.

Für die Regeneration des NOX-Speichers 8 wird die Brennkraftmaschine 2 stöchiometrisch oder leicht unterstöchiometrisch, jedenfalls nicht überstöchiometrisch betrieben. Bei einem stöchiometrischen Betrieb ist die Luftzahl gleich 1. Bei einem unterstöchiometrischen Betrieb wird die Luftzahl auf einen Wert kleiner als 1,0 eingestellt. Der stöchiometrische oder leicht unterstöchiometrische Betrieb der Brennkraftmaschine 2 wird über die Steuerung 22 bzw. über die Motorsteuerung 24 eingestellt.

Während dieses Regenerationsbetriebs der Brennkraftmaschine 2 steuert die Steuerung 22 die Reformateinleiteinrichtung 16 zum Einleiten von Reformatgas in die Abgasleitung 7 stromauf des NOX-Speichers 8 bzw. zwischen dem Partikelfilter 9 und dem NOX-Speicher 8 an. Hierzu betätigt die Steuerung 22 beispielsweise die Reformatfördereinrichtung 21 auf geeignete Weise. Das während des Betriebs des Reformers 11 bzw. während des Betriebs des Brennstoffzellensystems 28 generierte Reformatgas wird somit zumindest teilweise über die Reformatleitung 17 in die Abgasleitung 7 eingespeist, vermischt sich dort mit dem Motorabgas und führt im NOX-Speicher 8 zur gewünschten Regenerationsreaktion. Sobald die Regeneration des NOX-Speichers 8 beendet ist, z.B. nach einer vorbestimmten Zeitdauer, deaktiviert die Steuerung 22 die Reformatfördereinrichtung 21. Außerdem wird die Brennkraftmaschine 22 wieder in ihren Normalbetriebszustand zurückversetzt.

Für die Regeneration des Partikelfilters 9 betätigt die Steuerung 22 die Reformateinleiteinrichtung 16 zum Einleiten von Reformatgas stromauf des Partikelfilters 9. Das heiße Reformatgas kann bereits die erwünschte Aufheizung des Partikelfilters 9 auf die Aktivierungs- bzw. Light-Off-Temperatur der Regenerationsreaktion bewirken. Demnach kann es ausreichend sein, das Reformatgas stromab des Oxidationskatalysators 10 in die Abgasleitung 7 einzuleiten. Ebenso kann das Reformatgas stromauf des Oxidationskatalysators 10 in die Abgasleitung 7 eingeleitet werden, um so durch die Umsetzung des Wasserstoffs im Oxidationskatalysator 10 Wärme zu erzeugen, die über die Abgasströmung in das Partikelfilter 9 gelangt und dieses aufheizt.

Eine Einleitung von Reformatgas in die Abgasleitung 7 außerhalb des jeweiligen Regenerationsbetriebs ist während des Betriebs des Brennstoffzellensystems 28 bzw. des Reformers 11 nicht zu erwarten, da die Reformatleitung 17 durch den Reformatwärmeübertrager 19 und durch die Reformatfördereinrichtung 21 einen vergleichsweise hohen Durchströmungswiderstand aufweist. Grundsätzlich kann jedoch aus Sicherheitsgründen ein entsprechendes Sperrventil, z.B. die Ventileinrichtung 42, in der Reformatleitung 17 angeordnet sein.

Kumulativ oder alternativ kann vorgesehen sein, beim Starten der Brennkraftmaschine 2 auch bei einer Luftzahl größer als 1 die Reformateinleiteinrichtung 16 zum Einleiten von Reformatgas in die Abgasleitung 7 anzusteuern. Durch Einleiten des Reformatgases stromauf des NOX-Speichers 8 bzw. stromauf des Oxidationskatalysators 10 ist es möglich, den NOX-Speicher 8 und/oder den Oxidationskatalysator 10 rascher auf die jeweilige Betriebstemperatur zu bringen, die der NOX-Speicher 8 benötigt, um die gewünschte Speicherfunktion für NOX zu entfalten, und die der Oxidationskatalysator 10 benötigt, um die gewünschte Oxidation von Restkohlenwasserstoffen und Kohlenmonoxid durchzuführen.

Vorteilhaft ist bei den unterschiedlichen Betriebszuständen, wenn die einzelnen Steuerungen 22, 24 und 51 insoweit miteinander kommunizieren, dass ein Parallelbetrieb des Brennstoffzellensystems 28 zur Stromerzeugung mit dem Bedarf an Reformatgas zum Starten der Brennkraftmaschine 2 bzw. zum Regenerieren des NOX-Speichers 8 bzw. des Partikelfilters 9 abgestimmt werden kann.

## Patentansprüche

1. Brennkraftmaschinensystem, insbesondere in einem Kraftfahrzeug,
- mit einer mit einem Kraftstoff betreibbaren Brennkraftmaschine (2) zum Generieren von Antriebsleistung,
- mit einer Abgasleitung (7) zum Abführen von Motorabgas,
- mit einem in der Abgasleitung (7) angeordneten NOX-Speicher (8) zum Speichern von im Motorabgas enthaltenem NOX und/oder einem in der Abgasleitung (7) angeordneten Partikelfilter (9) zum Speichern von im Motorabgas enthaltenen Partikeln und/oder einem in der Abgasleitung (7) angeordneten Oxidationskatalysator (10) zum Umsetzen von im Motorabgas enthaltenen Kohlenwasserstoffen und Kohlenmonoxid,
- mit einem Reformer (11) zum Generieren von Wasserstoffgas enthaltendem Reformatgas aus einem Wasserstoff enthaltenden Brennstoff und einem Sauerstoff enthaltenden Oxidator,
- mit einer Reformateinleiteinrichtung (16) zum Einleiten von Reformatgas in die Abgasleitung (7) stromauf des NOX-Speichers (8) und/oder stromauf des Partikelfilters (9) und/oder stromauf des Oxidationskatalysators (10,
- wobei die Reformateinleiteinrichtung (16) eine Reformatleitung (17) aufweist, durch die das Reformatgas stromauf des NOX-Speichers (8) und/oder stromauf des Partikelfilters (9) und/oder stromauf des Oxidationskatalysators (10) in die Abgasleitung (7) einleitbar ist,
**dadurch gekennzeichnet,**
- **dass** die Reformateinleiteinrichtung (16) einen Reformatwärmeübertrager (19) aufweist, der in die Reformatleitung (17) eingebunden ist,
- **dass** die Reformateinleiteinrichtung (16) eine Reformatfördereinrichtung (21) aufweist, die stromab des Reformatwärmeübertragers (19) in der Reformatleitung (17) angeordnet ist.

2. Brennkraftmaschinensystem nach Anspruch 1,
**dadurch gekennzeichnet,**
- **dass** ein Kraftstofftank (5) zur Bevorratung des Kraftstoffs vorgesehen ist,
- **dass** eine Kraftstoffleitung (3) zur Versorgung der Brennkraftmaschine (2) mit dem Kraftstoff an den Kraftstofftank (5) angeschlossen ist,
- **dass** eine Brennstoffleitung (12) zur Versorgung des Reformers (11) mit dem als Brennstoff dienenden Kraftstoff an den Kraftstofftank (5) angeschlossen ist.

3. Brennkraftmaschinensystem nach Anspruch 1 oder 2,
**dadurch gekennzeichnet,**
**dass** der Reformatwärmeübertrager (19) außerdem in einen Kühlkreis (20) der Brennkraftmaschine (2) eingebunden ist und die Reformatleitung (17) mit dem Kühlkreis (20) wärmeübertragend koppelt.

4. Brennkraftmaschinensystem nach einem der Ansprüche 1 bis 3,
**dadurch gekennzeichnet,**
**dass** die Reformateinleiteinrichtung (16) einen Reformatspeicher (43) mit Ventileinrichtung (42) aufweist, der an die Reformatleitung (17) angeschlossen ist.

5. Brennkraftmaschinensystem nach einem der Ansprüche 1 bis 4,
**dadurch gekennzeichnet,**
**dass** eine mit der Brennkraftmaschine (2) oder einer Motorsteuerung (24) sowie mit der Reformateinleiteinrichtung (16) gekoppelte Steuerung (22) vorgesehen ist, die so ausgebildet ist,
- **dass** sie zum Regenerieren des NOX-Speichers (8) während eines stöchiometrischen oder unterstöchiometrischen Betriebs der Brennkraftmaschine (2) die Reformateinleiteinrichtung (16) zum Einleiten von Reformatgas in die Abgasleitung (7) stromauf des NOX-Speichers (8) ansteuert, und/oder
- **dass** sie zum Aufheizen des NOX-Speichers (8) während eines überstöchiometischen Betriebs der Brennkraftmaschine (2) die Reformateinheiteinrichtung (16) zum Einleiten von Reformatgas in die Abgasleitung (7) stromauf des NOX-Speichers (8) ansteuert, und/oder
- **dass** sie zum Regenerieren des Partikelfilters (9) während eines überstöchiometrischen Betriebs der Brennkraftmaschine (2) die Reformateinleiteinrichtung (16) zum Einleiten von Reformatgas in die Abgasleitung (7) stromauf des Partikelfilters (9) und/oder stromauf des Oxidationskatalysators (10) ansteuert, und/oder
- **dass** sie zum Aufheizen des Oxidationskatalysators (10) während eines überstöchiometischen Betriebs der Brennkraftmaschine (2) die Reformateinheiteinrichtung (16) zum Einleiten von Reformatgas in die Abgasleitung (7) stromauf des Oxidationskatalysators (10) ansteuert.

6. Brennkraftmaschinensystem nach einem der Ansprüche 1 bis 5,
**dadurch gekennzeichnet,**
**dass** der Reformer (11) Bestandteil eines Brennstoffzellensystems (28) ist, das neben dem Reformer (11) zumindest eine Brennstoffzelle (29) zum Generieren von elektrischem Strom aus einem durch das Reformatgas gebildeten Wasserstoffgas enthaltenden Anodengas und einem Sauerstoffgas enthaltenden Kathodengas aufweist.

7. Brennkraftmaschinensystem nach Anspruch 6,
**dadurch gekennzeichnet,**
**dass** das Brennstoffzellensystem (28) einen Restgasbrenner (37) zum Verbrennen von Wasserstoffgas enthaltenden Anodenabgas mit Sauerstoffgas enthaltendem Kathodenabgas aufweist.

8. Brennkraftmaschinensystem nach Anspruch 7,
**dadurch gekennzeichnet,**
**dass** das Brennstoffzellensystem (28) zumindest einen Wärmeübertrager (40) aufweist, der vom Restgasbrenner (37) erzeugtes Brennerabgas mit der Brennstoffzelle (29) zuzuführendem Kathodengas wärmeübertragend koppelt.

## Claims

1. A combustion engine system, more preferably in a motor vehicle,
- with a combustion engine (2) operable with a fuel for generating drive power,
- with an exhaust line (7) for discharging of engine exhaust gas,
- with a NOX storage unit (8) arranged in the exhaust line (7) for the storage of NOX contained in engine exhaust gas and/or a particle filter (9) arranged in the exhaust line (7) for the storage of particles contained in the engine exhaust gas and/or an oxidation catalytic converter (10) arranged in the exhaust line (7) for converting hydrocarbons and carbon monoxide contained in the engine exhaust gas,
- with a reformer (11) for generating reformate gas containing hydrogen gas from a fuel containing hydrogen and an oxidant containing oxygen,
- with a reformate feeding device (16) for the feeding of reformate gas into the exhaust line (7) upstream of the NOX storage unit (8) and/or upstream of the particle filter (9) and/or upstream of the oxidation catalytic converter (10),
- wherein the reformate feeding device (16) comprises a reformate line (17) through which the reformate gas upstream of the NOX storage unit (8) and/or upstream of the particle filter (9) and/or upstream of the oxidation catalytic converter (10) can be fed into the exhaust line (7),
**characterized**
- **in that** the reformate feeding device (16) comprises a reformate heat transfer unit (19) which is incorporated in the reformate line (17),
- **in that** the reformate feeding device (16) comprises a reformate delivery device (21) which is arranged in the reformate line (17) downstream of the reformate heat transfer unit (19).

2. The combustion engine system according to Claim 1, **characterized**
- **in that** a fuel tank (5) for the storage of the fuel is provided,
- **in that** a fuel line (3) for the supply of the combustion engine (2) with the fuel is connected to the fuel tank (5),
- **in that** a fuel line (12) for the supply of the reformer (11) with the fuel serving as combustion fuel is connected to the fuel tank (5).

3. The combustion engine system according to Claim 1 or 2, **characterized in that** the reformate heat transfer unit (19) is additionally incorporated in a cooling circuit (20) of the combustion engine (2) and couples the reformate line (17) with the cooling circuit (20) in a heat transmitting manner.

4. The combustion engine system according to any one of the Claims 1 to 3, **characterized in that** the reformate feeding device (16) comprises a reformate storage unit (43) with valve device (42) which is connected to the reformate line (17).

5. The combustion engine system according to any one of the Claims 1 to 4, **characterized in that** a control (22) coupled with the combustion engine (2) or an engine control (24) as well as with the reformate feeding device (16) is provided, which is designed
- so that for regenerating the NOX storage unit (8) during a stoichiometric or sub-stoichiometric operation of the combustion engine (2) it activates the reformate feeding device (16) for the feeding of reformate gas in the exhaust line (7) upstream of the NOX storage unit (8) and/or
- **in that** for the heating of the NOX storage unit during an over-stoichiometric operation of the combustion engine (2) it activates the reformate feeding device (16) for the feeding of reformate gas in the exhaust line (7) upstream of the particle filter (9) and/or upstream of the oxidation catalytic converter (10), and/or
- **in that** for heating the oxidation catalytic converter (10) during an over-stoichiometric operation of the combustion engine (2) it activates the reformate feeding device (16) for the feeding of reformate gas in the exhaust line (7) upstream of the oxidation catalytic converter (10).

6. The combustion engine system according to any one of the Claims 1 to 5, **characterized in that** the reformer (11) is part of a fuel cell system (28) which in addition to the reformer (11) comprises at least one fuel cell (29) for generating electric current from a hydrogen gas-containing anode gas formed through the reformate gas and an oxygen-gas containing cathode gas.

7. The combustion engine system according to Claim 6, **characterized in that** the fuel cell system (28) comprises a residual gas burner (37) for combusting anode waste gas containing hydrogen gas with cathode waste gas containing oxygen gas.

8. The combustion engine system according to Claim 7, **characterized in that** the fuel cell system (28) comprises at least one heat transfer unit (40) which couples burner waste gas generated by the residual gas burner (37) with the cathode gas to be fed to the fuel cell (29) in a heat transmitting manner.

## Revendications

1. Système de moteur à combustion interne, en particulier dans un véhicule automobile, comprenant :
- un moteur à combustion interne (2) pouvant fonctionner avec un carburant pour générer de la puissance d'entraînement,
- une conduite d'échappement (7) pour l'évacuation des gaz brûlés du moteur,
- un accumulateur de NOX (8) disposé dans la conduite d'échappement (7) pour le stockage de NOX contenu dans les gaz brûlés du moteur et/ou un filtre à particules (9) disposé dans la conduite d'échappement (7) pour le stockage de particules contenues dans les gaz brûlés du moteur et/ou un catalyseur à oxydation (10) disposé dans la conduite d'échappement (7) pour la transformation d'hydrocarbures et de monoxyde de carbone contenus dans les gaz brûlés du moteur,
- un reformeur (11) pour générer du gaz de réformat contenant de l'hydrogène à partir d'un combustible contenant de l'hydrogène et d'un oxydant contenant de l'oxygène,
- un dispositif d'introduction de réformat (16) pour l'introduction de gaz de réformat dans la conduite d'évacuation (7) en amont de l'accumulateur de NOX (8) et/ou en amont du filtre à particules (9) et/ou en amont du catalyseur à oxydation (10),
- le dispositif d'introduction de réformat (16) présentant une conduite de réformat (17), par laquelle le gaz de réformat peut être introduit en amont de l'accumulateur de NOX (8) et/ou en amont du filtre à particules (9) et/ou en amont du catalyseur à oxydation (10) dans la conduite d'échappement (7),
**caractérisé en ce que**
- le dispositif d'introduction de réformat (16) présente un échangeur de chaleur à réformat (19), qui est intégré dans la conduite de réformat (17),
- le dispositif d'introduction de réformat (16) présente un dispositif transporteur de réformat (21), qui est disposé en aval de l'échangeur de chaleur à réformat (19) dans la conduite de réformat (17) .

2. Système de moteur à combustion interne selon la revendication 1,
**caractérisé en ce que**
- une cuve de carburant (5) est prévue pour l'approvisionnement en carburant,
- **en ce qu'**une conduite de carburant (3) est raccordée à la cuve de carburant (5) pour l'alimentation du moteur à combustion interne (2) en carburant,
- **en ce qu'**une conduite de carburant (12) est raccordée à la cuve de carburant (5) pour l'alimentation du reformeur (11) avec le carburant servant de combustible.

3. Système de moteur à combustion interne selon la revendication 1 ou 2,
**caractérisé en ce que**
l'échangeur de chaleur à réformat (19) est intégré d'autre part dans un circuit de refroidissement (20) du moteur à combustion interne (2) et couple par transfert de chaleur la conduite de réformat (17) avec le circuit de refroidissement (20).

4. Système de moteur à combustion interne selon l'une quelconque des revendications 1 à 3,
**caractérisé en ce que**
le dispositif d'introduction de réformat (16) présente un accumulateur de réformat (43) avec système de soupape (42) qui est raccordé à la conduite de réformat (17) .

5. Système de moteur à combustion interne selon l'une quelconque des revendications 1 à 4,
**caractérisé en ce que**
il est prévu une commande (22) couplée avec le moteur à combustion interne (2) ou une commande de moteur (24) et le dispositif d'introduction de réformat (16), qui est conçue de telle sorte que
- elle active le dispositif d'introduction de réformat (16) pour l'introduction de gaz de réformat dans la conduite d'échappement (7) en amont de l'accumulateur de NOX (8) pour la régénération de l'accumulateur de NOX (8) pendant un fonctionnement stoechiométrique ou sous-stoechiométrique du moteur à combustion interne (2), et/ou
- que, pour le réchauffement de l'accumulateur de NOX (8) pendant un fonctionnement sur-stoechiométrique du moteur à combustion interne (2), elle active le dispositif d'introduction de réformat (16) pour l'introduction de gaz de réformat dans la conduite d'échappement (7) en amont de l'accumulateur de NOX (8), et/ou
- que, pour régénérer le filtre à particules (9) pendant un fonctionnement sur-stoechiométrique du moteur à combustion interne (2), elle active le dispositif d'introduction de réformat (16) pour l'introduction de gaz de réformat dans la conduite d'échappement (7) en amont du filtre à particules (9) et/ou en amont du catalyseur à oxydation (10), et/ou
- que, pour le réchauffement du catalyseur à oxydation (10) pendant un fonctionnement sur-stoechiométrique du moteur à combustion interne (2), elle active le dispositif d'introduction de réformat (16) pour l'introduction de gaz de réformat dans la conduite d'échappement (7) en amont du catalyseur à oxydation (10).

6. Système de moteur à combustion interne selon l'une quelconque des revendications 1 à 5,
**caractérisé en ce que**
le reformeur (11) fait partie intégrante d'un système de cellule de combustible (28), qui présente, outre le reformeur (11) au moins une cellule de combustible (29) pour la génération de courant électrique à partir d'un gaz d'anode contenant de l'hydrogène formé par le gaz de réformat et d'un gaz de cathode contenant de l'oxygène.

7. Système de moteur à combustion interne selon la revendication 6,
**caractérisé en ce que**
le système de cellule de combustible (28) présente un brûleur de gaz résiduel (37) pour la combustion de gaz brûlés d'anode contenant de l'hydrogène avec du gaz brûlé de cathode contenant de l'oxygène.

8. Système de moteur à combustion interne selon la revendication 7,
**caractérisé en ce que**
le système de cellule de combustible (28) présente au moins un échangeur de chaleur (40), qui couple par transmission de chaleur du gaz de brûleur généré par le brûleur de gaz résiduel (37) avec du gaz de cathode à amener à la cellule de combustible (29).
